# EUROPEAN PATENT APPLICATION

(11) **EP 4 331 527 A1**
(43) Date of publication of application: **06.03.2024**
(21) Application number: 22868561.6
(22) Date of filing: 18.02.2022
(51) Int. Cl.: A61C 5/40, A61C 5/42

(54) **ELECTROMECHANICAL CONTROL SYSTEM OF ROOT CANAL TREATMENT DEVICE, AND CUTTING CONTROL METHOD AND APPARATUS THEREFOR**

(30) Priority: 16.09.2021 CN 202111086294
(71) Applicant: Guilin Woodpecker Medical Instrument Co., Ltd., Guilin, Guangxi 541004 (CN)
(72) Inventor: TERAUCHI, Yoshitsugu, Guilin, Guangxi 541004 (CN); WEI, Fengwen, Guilin, Guangxi 541004 (CN); LONG, Zhongshi, Guilin, Guangxi 541004 (CN); XU, Jiazhen, Guilin, Guangxi 541004 (CN)
(74) Representative: Loyer & Abello
(86) International application number: PCT/CN2022/076764
(87) International publication number: WO 2023/040181

(57) **Abstract**

An electromechanical control system of a root canal treatment device, and a cutting control method and apparatus therefor, the method and apparatus are applied to the electromechanical control system of a root canal treatment device. Specifically, after the drive motor used for driving a root canal file in the root canal treatment device is started up, the root canal file is controlled so as to perform a pendulum movement in a preset angle range; and after the root canal file moves across a step (102) in a root canal (101) by means of the pendulum movement, a cutting operation is performed according to a preset working mode of a user so as to eliminate the step (102). Moving across the step (102) is effectively carried out by means of the pendulum movement, and after moving across the step (102), the root canal file can be controlled according to a conventional control policy to sweep the root canal (101) to thereby allow the root canal (101) that has the step (102) to be effectively formed.

## Description

### Technical Field

The present disclosure claims priority to the Chinese application with the filing number 202111086294.0 filed on September 16, 2021 with the Chinese Patent Office and entitled "Electromechanical Control System of Root Canal Treatment Device, and Cutting Control Method and Apparatus therefor", the contents of which are incorporated herein by reference in entirety.

### Background Art

The root canal treatment device, which is a medical device commonly used in dental treatment, realizes cutting of a root canal of a tooth by controlling movement of a root canal file by an internal electromechanical control system, and removes impurities in the root canal, so as to effectively shape the root canal.

The electromechanical control system of the existing root canal treatment device realizes the cutting of root canal debris mainly by controlling continuous movement and reciprocating movement of the root canal file. With regard to a complex root canal, particularly a root canal that forms a step, the above control method cannot enable the root canal file to move across and eliminate the step, and cannot shape the root canal.

### Summary

In view of this, the present disclosure provides an electromechanical control system of a root canal treatment device and a cutting control method and apparatus therefor, which are used for enabling a root canal file to effectively move across and eliminate a step in a root canal, so as to shape the root canal.

In order to achieve the above objectives, solutions are now provided as follows.

A cutting control method is applied to an electromechanical control system of a root canal treatment device, wherein the cutting control method includes steps of:
controlling a root canal file to perform a pendulum movement according to a preset angle range, after a drive motor used for driving the root canal file in the root canal treatment device is started up; and
controlling the root canal file to perform a cutting operation according to a working mode preset by a user, after the root canal file moves across a step in the root canal through the pendulum movement.

Optionally, the preset angle range is greater than or equal to 0 and less than or equal to 400.

Optionally, the step of performing a cutting operation according to a working mode preset by a user includes a step of:
controlling the root canal file to perform a reciprocating movement;
controlling the root canal file to perform a continuous rotation; or
controlling the root canal file to perform a self-adaptive movement.

Optionally, the reciprocating movement has a forward angle range of greater than zero and less than or equal to 600, and a reverse angle range of greater than zero and less than or equal to 600.

Optionally, the step of controlling the root canal file to perform a self-adaptive movement includes steps of:
controlling the root canal file to perform the continuous rotation at set rotation speed and torque;
controlling the root canal file to perform the reciprocating movement when resistance encountered is greater than the torque; and
resuming the continuous movement when the resistance is removed or less than the torque.

A cutting control apparatus is applied to an electromechanical control system of a root canal treatment device, wherein the cutting control apparatus includes:
a first control module, configured to control a root canal file to perform a pendulum movement according to a preset angle range, after a drive motor used for driving the root canal file in the root canal treatment device is started up; and
a second control module, configured to control the root canal file to perform a cutting operation according to a working mode preset by a user, after the root canal file moves across a step in a root canal through the pendulum movement.

Optionally, the preset angle range is greater than or equal to 0 and less than or equal to 400.

Optionally, the second control module includes:
a first control unit, configured to control the root canal file to perform a reciprocating movement;
a second control unit, configured to control the root canal file to perform a continuous rotation; or
a third control unit, configured to control the root canal file to perform a self-adaptive movement.

Optionally, the reciprocating movement has a forward angle range of greater than zero and less than or equal to 600, and a reverse angle range of greater than zero and less than or equal to 600.

Optionally, the second control unit is configured to control the root canal file to perform the continuous rotation, including continuous forward rotation and continuous reverse rotation, at set rotation speed and torque.

Optionally, the third control unit is configured to control the root canal file to perform the self-adaptive movement. The root canal file is controlled to perform the continuous rotation at set rotation speed and torque. When resistance encountered is greater than the torque, the root canal file is controlled to perform the reciprocating movement, and when the resistance is removed or less than the torque, the continuous movement is resumed.

An electromechanical control system, applied to a root canal treatment device, includes the cutting control apparatus as described above.

It can be seen from the above technical solutions that the present disclosure discloses an electromechanical control system of a root canal treatment device, and a cutting control method and apparatus therefor. The method and the apparatus are applied to the electromechanical control system of a root canal treatment device. Specifically, after the drive motor which is used for driving the root canal file and is in the root canal treatment device is started up, the root canal file is controlled to perform the pendulum movement according to the preset angle range; and when the root canal file moves across the step in the root canal through the pendulum movement, the cutting operation is carried out according to the working mode preset by the user to eliminate the step. In the above solution, moving across the step can be effectively carried out through the pendulum movement, and after moving across the step, the root canal file can be controlled according to a conventional control solution to clean the root canal, to thereby allow the root canal that has the step to be effectively shaped.

### Brief Description of Drawings

In order to more clearly illustrate the technical solutions in the embodiments of the present disclosure or in the prior art, drawings that need to be used in the description of the embodiments or the prior art will be introduced briefly below. Apparently, the drawings in the following description are only some embodiments of the present disclosure. Those ordinarily skilled in the art still could obtain other drawings according to these drawings, without paying any inventive efforts.
FIG. 1 is a flowchart of a cutting control method in embodiments of the present disclosure;
FIG. 2 is a sectional view of a tooth;
FIG. 3 is a block diagram of a cutting control apparatus in embodiments of the present disclosure;
FIG. 4 is a block diagram of another cutting control apparatus in embodiments of the present disclosure;
FIG. 5 is a block diagram of a further cutting control apparatus in embodiments of the present disclosure;
FIG. 6 is a block diagram of a still another cutting control apparatus in embodiments of the present disclosure;
FIG. 7 is a block diagram of a yet another cutting control apparatus in embodiments of the present disclosure; and
FIG. 8 is a block diagram of an electromechanical control system in embodiments of the present disclosure.

### Detailed Description of Embodiments

The technical solutions in the embodiments of the present disclosure will be described clearly and completely below in conjunction with the drawings in the embodiments of the present disclosure. Apparently, the embodiments described are only some but not all embodiments of the present disclosure. Based on the embodiments in the present disclosure, all of other embodiments obtained by those ordinarily skilled in the art without using any inventive efforts shall fall within the scope of protection of the present disclosure.

### Embodiment 1

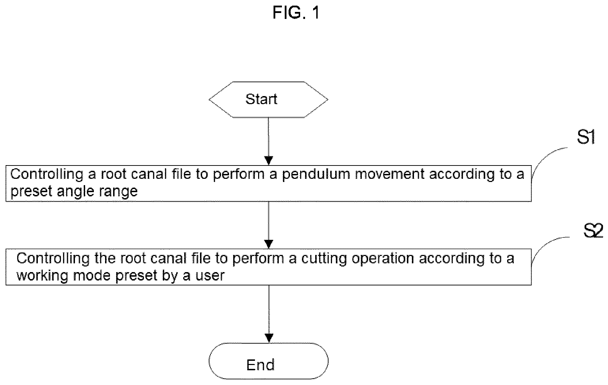

FIG. 1 is a flowchart of a cutting control method in embodiments of the present disclosure.

As shown in FIG. 1, the cutting control method provided in the present embodiment is applied to an electromechanical control system of a root canal treatment device. The root canal treatment device is provided with a root canal file. The cutting control method specifically includes the following steps.

S1, controlling the root canal file to perform a pendulum movement according to a preset angle range.

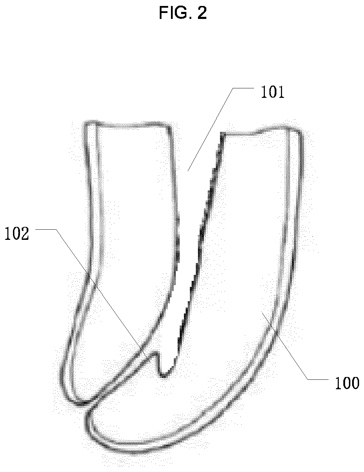

That is, after a drive motor used for driving the root canal file in the root canal treatment device is started up, the root canal file placed in a root canal of a tooth is controlled to perform the pendulum movement according to the preset angle range, wherein the preset angle range is greater than 0 and less than or equal to 400. Moving across a step in the root canal can be carried out through the pendulum movement. The step is as shown in FIG. 2, wherein the step 102 is located in a root canal 101 of a tooth 100.

S2, controlling the root canal file to perform a cutting operation according to a working mode preset by a user.

That is, after the root canal file moves across the step in the root canal through the pendulum movement, the root canal file is controlled to perform the cutting operation according to the working mode preset by the user, until elimination of the step and cutting and removal of substances in the root canal are completed.

In the present disclosure, the working mode preset by the user includes a reciprocating movement, a continuous rotation, and a self-adaptive movement. Specifically, after the root pipe file moves across the step, the root pipe file is controlled to perform the reciprocating movement, the root pipe file is controlled to perform the continuous rotation or the root pipe file is controlled to perform the self-adaptive movement. A forward angle range of the reciprocating movement is greater than zero and less than or equal to 600, and a reverse angle range thereof is greater than zero and less than or equal to 600. The continuous rotation herein is continuous forward rotation or reverse rotation.

The self-adaptive movement specifically includes the following steps.

Firstly, the root canal file is controlled to perform the continuous rotation at set rotation speed and torque. The continuous rotation herein may be forward rotation or reverse rotation. When resistance encountered is greater than the set torque above, the root canal file is controlled to perform the reciprocating movement, so as to eliminate the blockage; and when the resistance is removed or less than the above torque, the continuous movement is resumed, until the cleaning of the root canal is completed.

It can be seen from the above technical solution that the present embodiment provides a cutting control method. This method is applied to the electromechanical control system of a root canal treatment device. Specifically, after the drive motor used for driving the root canal file, in the root canal treatment device, is started up, the root canal file is controlled to perform the pendulum movement according to the preset angle range; and after the root canal file moves across the step in the root canal through the pendulum movement, the cutting operation is performed according to the working mode preset by the user, so as to eliminate the step and clean up the debris. In the above solution, moving across the step can be effectively carried out through the pendulum movement, and after moving across the step, the root canal file can be controlled according to a conventional control solution to clean the root canal, to thereby eliminate the step, and enable the root canal to be effectively shaped.

### Embodiment 2

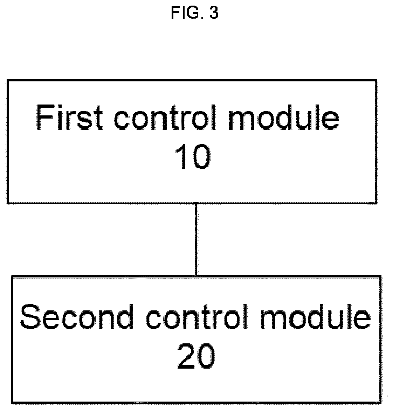

FIG. 3 is a block diagram of a cutting control apparatus in embodiments of the present disclosure.

As shown in FIG. 3, the cutting control apparatus provided in the present embodiment is applied to an electromechanical control system of a root canal treatment device. The root canal treatment device is provided with a root canal file. The cutting control apparatus specifically includes a first control module 10 and a second control module 20.

The first control module is configured to control the root canal file to perform a pendulum movement according to a preset angle range.

That is, after a drive motor used for driving the root canal file in the root canal treatment device is started up, the root canal file placed in a root canal of a tooth is controlled to perform the pendulum movement according to the preset angle range, wherein the preset angle range is greater than 0 and less than or equal to 400. Moving across a step in the root canal can be carried out through the pendulum movement. The step is as shown in FIG. 2, wherein a step 102 is located in a root canal 101 of a tooth 100.

The second control module is configured to control the root canal file to perform a cutting operation according to a working mode preset by a user.

That is, after the root canal file moves through the pendulum movement across a position where the step is located, the root canal file is controlled to perform the cutting operation according to the working mode preset by the user, to eliminate the step in the root canal, and meanwhile complete the cutting and removal of substances in the root canal.

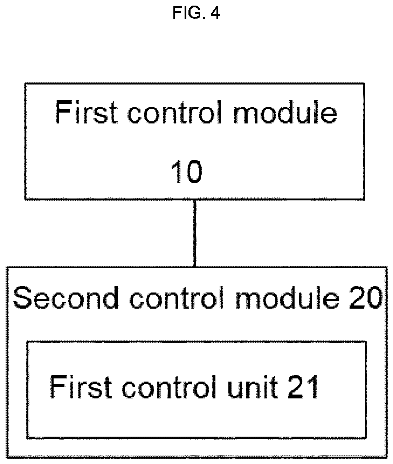

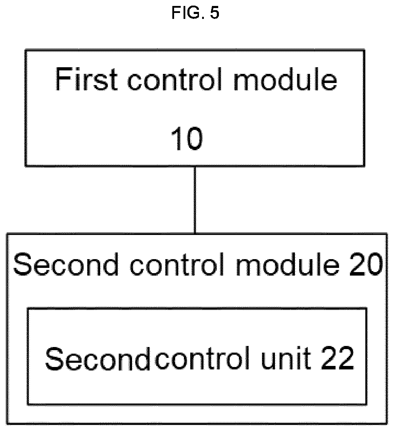

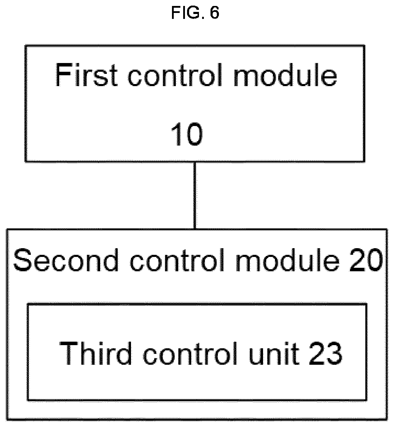

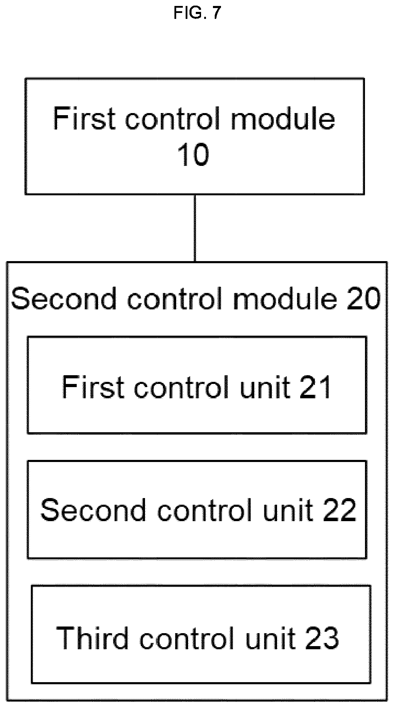

In the present disclosure, the working mode preset by the user includes a reciprocating movement, a continuous rotation, and a self-adaptive movement. On this basis, the second control module includes some or all of a first control unit 21, a second control unit 22, and a third control unit 23, as shown in FIG. 4 to FIG. 7. Specifically, the first control unit is configured to control the root pipe file to perform the reciprocating movement after the root pipe file moves across the step, the second control unit is configured to control the root pipe file to perform the continuous rotation, and the third control unit is configured to control the root pipe file to perform the self-adaptive movement. A forward angle range of the reciprocating movement is greater than zero and less than or equal to 600, and a reverse angle range thereof is greater than zero and less than or equal to 600. The continuous rotation herein is forward rotation or reverse rotation.

The third control unit controls the root canal file specifically according to the following steps.

Firstly, the root canal file is controlled to perform the continuous rotation at set rotation speed and torque. The continuous rotation herein may be forward rotation or reverse rotation. When a resistance encountered is greater than the set torque above, the root canal file is controlled to perform the reciprocating movement, so as to eliminate the blockage; and when the resistance is removed or less than the above torque, the continuous movement is resumed, until the cleaning of the root canal is completed.

It can be seen from the above technical solution that the present embodiment provides a cutting control apparatus. This apparatus is applied to the electromechanical control system of a root canal treatment device. Specifically, after the drive motor used for driving the root canal file in the root canal treatment device is started up, the root canal file is controlled to perform the pendulum movement according to the preset angle range; and after the root canal file moves across the step in the root canal through the pendulum movement, the cutting operation is performed according to the working mode preset by the user. In the above solution, moving across the step can be effectively carried out through the pendulum movement, and after moving across the step, the root canal file can be controlled according to a conventional control solution to eliminate the step in the root canal and simultaneously clean the root canal, to thereby allow the root canal that has the step to be effectively shaped.

### Embodiment 3

The present embodiment provides an electromechanical control system which is provided with the cutting control apparatus in the above embodiment. This apparatus is specifically used to: control, after a drive motor used for driving a root canal file in a root canal treatment device is started up, the root canal file to perform a pendulum movement according to a preset angle range; and carry out, after the root canal file moves across a step in a root canal through the pendulum movement, a cutting operation according to a working mode preset by a user. In the above solution, moving across the step can be effectively carried out through the pendulum movement, and after moving across the step, the root canal file can be controlled according to a conventional control solution to clean the root canal, to thereby allow the root canal that has the step to be effectively shaped.

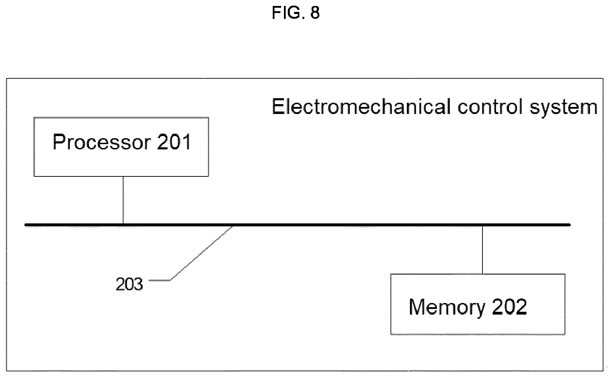

In addition, this electromechanical control system includes at least one processor 201 and a memory 202, and the two are connected with each other via a data bus 203, as shown in FIG. 8. The memory is used for storing computer programs or instructions, and the processor is used for executing the corresponding computer program(s) or instruction(s), so that this electromechanical control system implements the cutting control method in the embodiments.

The method specifically includes as follows: after the drive motor used for driving the root canal file in the root canal treatment device is started up, the root canal file is controlled to perform the pendulum movement according to the preset angle range; and when the root canal file moves across the step in the root canal through the pendulum movement, the cutting operation is carried out according to the working mode preset by the user. In the above solution, moving across the step can be effectively carried out through the pendulum movement, and after moving across the step, the root canal file can be controlled according to a conventional control solution to clean the root canal, to thereby allow the root canal that has the step to be effectively shaped.

Various embodiments in the present description are described in a progressive manner. The part that each embodiment focuses on is different from those of others. For the same or similar parts, references can be made between each other.

Those skilled in the art should understand that the embodiments in the present disclosure could be provided as methods, apparatuses or computer program products. Therefore, the embodiments in the present disclosure may be in the forms of full-hardware embodiments, full-software embodiments, or embodiments of combination of software and hardware. Moreover, the embodiments in the present disclosure may be in the form of one or more computer program products which are implemented in computer available storage media (including but not limited to disk memory, CD-ROM, optical memory, etc.) containing computer available program codes.

The embodiments of the present disclosure are described with reference to the flowchart and/or block diagrams of method, terminal device (system), and computer program product in the embodiments of the present disclosure. It should be understood that each flow and/or block in the flowchart and/or block diagrams, and a combination of the flows and/or the blocks in the flowchart and/or block diagrams can be realized by a computer program instruction. These computer program instructions can be provided in a processor of a general purpose computer, a specific computer, an embedded processor or other programmable data processing terminal devices so as to produce a machine, such that an apparatus, configured to realize a function designated in one or more flows in the flowchart and/or one or more blocks in the block diagrams, is produced through an instruction executed by the processor of the computer or other programmable data processing terminal devices.

These computer program instructions also can be stored in a computer readable memory capable of directing the computer or other programmable data processing terminal devices to work in a specific manner, such that instructions stored in the computer readable memory produce a manufactured product including an instruction apparatus, which instruction apparatus realizes the function designated in one or more flows of the flowchart and/or one or more blocks of the block diagrams.

These computer program instructions also can be loaded into computers or other programmable data processing terminal devices, such that a series of operation steps are performed on the computers or other programmable terminal devices to produce computer-implemented processing, so that instructions executed on the computers or other programmable terminal devices provide steps for realizing the functions designated in one or more flows of the flowchart and/or in one or more blocks of the block diagrams.

Although preferred embodiments of the present disclosure have been described, those skilled in the art could make other changes and modifications to these embodiments once they learn the basic inventive concept. Therefore, the appended claims are intended to be interpreted as including the preferred embodiments and all changes and modifications falling within the scope of the embodiments of the present disclosure.

Finally, it further should be noted that herein, relational terms such as first and second are merely used to distinguish one entity or operation from another entity or operation, while it is not necessarily required or implied that these entities or operations have any such practical relation or order. Moreover, terms "include", "contain" or any other variants thereof are intended to be non-exclusive, such that a process, a method, an article, or a terminal device including a series of elements not only includes those elements, but also includes other elements that are not explicitly listed, or further includes elements inherent to such process, method, article, or terminal device. Without more restrictions, an element defined with wordings "including a..." does not exclude presence of other same elements in the process, method, article or terminal device including the element.

The technical solutions provided in the present disclosure are introduced in detail in the above. Specific examples are used herein to illustrate the principle and embodiments of the present disclosure. The description of the above embodiments is only intended to help understanding the method of the present disclosure and the core idea thereof. Meanwhile, for those ordinarily skilled in the art, according to the idea of the present disclosure, there will be changes in the specific embodiments and the application range. In summary, the contents in the present description should not be construed as limitation to the present disclosure.

## Claims

1. A cutting control method, applicable to an electromechanical control system of a root canal treatment device, wherein the cutting control method comprises steps of:
controlling a root canal file to perform a pendulum movement according to a preset angle range, after a drive motor configured for driving the root canal file in the root canal treatment device is started up; and
controlling the root canal file to perform a cutting operation according to a working mode preset by a user, after the root canal file moves across a step in a root canal through the pendulum movement.

2. The cutting control method according to claim 1, wherein the preset angle range is greater than or equal to 0 and less than or equal to 400.

3. The cutting control method according to claim 1, wherein the step of perform the cutting operation according to the working mode preset by the user comprises a step of:
controlling the root canal file to perform a reciprocating movement;
controlling the root canal file to perform a continuous rotation; or
controlling the root canal file to perform a self-adaptive movement.

4. The cutting control method according to claim 3, wherein the reciprocating movement has a forward angle range of greater than zero and less than or equal to 600, and a reverse angle range of greater than zero and less than or equal to 600.

5. The cutting control method according to claim 3, wherein the step of controlling the root canal file to perform the self-adaptive movement comprises steps of:
controlling the root canal file to perform the continuous rotation at set rotation speed and torque;
controlling the root canal file to perform the reciprocating movement, when resistance encountered is greater than the torque; and
resuming the continuous movement when the resistance is removed or less than the torque.

6. A cutting control apparatus, applicable to an electromechanical control system of a root canal treatment device, wherein the cutting control apparatus comprises:
a first control module, configured to control a root canal file to perform a pendulum movement according to a preset angle range, after a drive motor configured for driving the root canal file in the root canal treatment device is started up; and
a second control module, configured to control the root canal file to perform a cutting operation according to a working mode preset by a user, after the root canal file moves across a step in a root canal through the pendulum movement.

7. The cutting control apparatus according to claim 6, wherein the preset angle range is greater than or equal to 0 and less than or equal to 400.

8. The cutting control apparatus according to claim 6, wherein the second control module comprises:
a first control unit, configured to control the root canal file to perform a reciprocating movement;
a second control unit, configured to control the root canal file to perform a continuous rotation; or
a third control unit, configured to control the root canal file to perform a self-adaptive movement.

9. The cutting control apparatus according to claim 8, wherein the reciprocating movement has a forward angle range of greater than zero and less than or equal to 600, and a reverse angle range of greater than zero and less than or equal to 600.

10. The cutting control apparatus according to claim 8, wherein the second control unit is configured to control the root canal file to perform the continuous rotation at set rotation speed and torque, the continuous rotation comprising continuous forward rotation and continuous reverse rotation.

11. The cutting control apparatus according to claim 8, wherein the third control unit is configured to control the root canal file to perform the self-adaptive movement, control the root canal file to perform the continuous rotation at set rotation speed and torque, control the root canal file to perform the reciprocating movement when resistance encountered is greater than the torque, and resume the continuous movement when the resistance is removed or less than the torque.

12. An electromechanical control system, applicable to a root canal treatment device, comprising the cutting control apparatus according to any one of claims 6-11.
